# EUROPEAN PATENT APPLICATION

(11) **EP 2 874 344 A1**
(43) Date of publication of application: **20.05.2015**
(21) Application number: 13816041.1
(22) Date of filing: 24.04.2013
(51) Int. Cl.: H04L 9/12, H04L 9/32

(54) **USER TERMINAL DEVICE AND ENCRYPTION METHOD FOR ENCRYPTING IN CLOUD COMPUTING ENVIRONMENT**

(30) Priority: 12.07.2012 KR 20120076194
(71) Applicant: Fasoo. Com Co., Ltd, Seoul 121-270 (KR)
(72) Inventor: KIM, Hyung-Suk, Seoul 137-820 (KR)
(74) Representative: Grünecker Patent- und Rechtsanwälte PartG mbB
(86) International application number: PCT/KR2013/003524
(87) International publication number: WO 2014/010818

(57) **Abstract**

The present invention provides a user terminal device and an encryption method for encrypting in a cloud computing environment. In the user terminal device used by a user to access a management server that stores data desired to be shared in a cloud computing environment, a hooking module injection unit injects a hooking module for encrypting secure data into a process of transmitting data to the management server before transmitting the secure data requiring security from among the data. A secure data detection unit runs the hooking module to monitor if secure data is input by a user, and detects the secure data. A secure data encryption unit generates encryption data in which the detected secure data is encrypted. According to the present invention, when using a file sharing cloud service, important data in a company or personal information can be prevented from being leaked by using encryption.

## Description

### [Technical Field]

The present invention relates to a user terminal device for encryption and an encryption method in a cloud computing environment, and more specifically, to a user terminal device for encryption and an encryption method that are used to enhance security of data to be shared in a cloud computing environment.

### [Background Art]

Cloud computing refers to a computing environment in which data is permanently stored in a server on the Internet and temporarily stored in an IT device such as a desktop computer, a tablet computer, a notebook, a netbook or a smartphone. That is, users may store data in the server on the Internet and use the data through various IT devices at any time and any place.

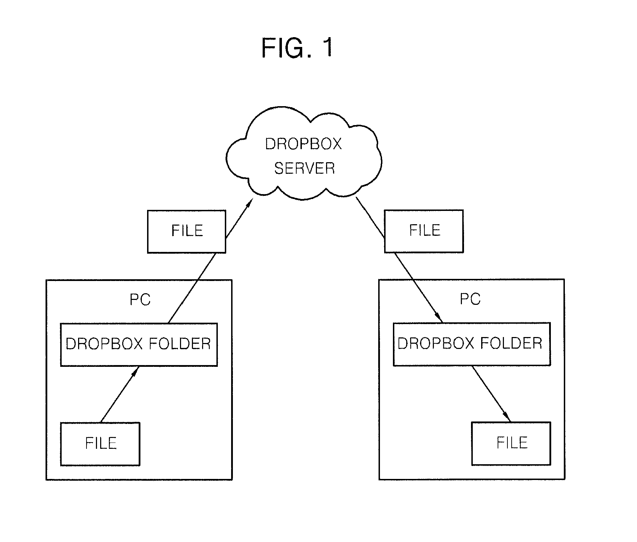

FIG. 1 is a diagram illustrating a dropbox service for sharing a file in a cloud computing environment.

As illustrated in FIG. 1, a dropbox is a web-based file sharing service using file synchronization and cloud computing. Specifically, the user copies his or her file to a dropbox folder through a PC in which a dropbox program capable of accessing a dropbox server is installed, and the file is directly transmitted to the dropbox server. Also, when the user of the same account logs in through another PC in which a dropbox program capable of accessing a dropbox server is installed, a folder structure and a file stored in the dropbox server are directly downloaded. Therefore, different users may share the dropbox folder and the file stored in the dropbox folder and perform collaboration. However, when such a file sharing cloud service is used, important company documents or personal information may be leaked. In particular, when collaboration is performed through folder sharing, information may be easily leaked.

In the related art, Korea Patent No. 1059199 discloses a cloud computing enterprise security management system and a method thereof. According to the disclosed method, security management may be flexibly performed such that resource usage of a guest machine is collected, analyzed, and provided for each user. However, when information for each user is collected and analyzed, a plurality of additional modules are necessary. Therefore, it is inefficient in terms of a construction time and cost.

In the related art, Korea Patent No. 1107056 discloses a method for protecting important information of a virtual machine in a cloud computing environment. According to the disclosed method, security management of information files may be performed using a virtual machine and a security server. However, information files may be leaked during a process of transmitting decrypted information files from the security server to the virtual machine.

### [Disclosure]

### [Technical Problem]

The present invention provides a user terminal device for encryption and an encryption method in a cloud computing environment that are able to prevent leakage of data and personal information shared in the cloud computing environment.

The present invention also provides a computer readable recording medium recording a program for executing an encryption method in a cloud computing environment in a computer, wherein the method is able to prevent leakage of data to be shared and personal information in the cloud computing environment.

### [Technical Solution]

According to an aspect of the present invention, there is provided a user terminal device for encryption in a cloud computing environment. The user terminal device that is used by a user in order to access a management server in which data to be shared is stored in a cloud computing environment, the device including: a hooking module injection unit configured to inject a hooking module for encrypting secure data for which security is required among the data into a process for transmitting the data to the management server before the secure data is transmitted to the management server; a secure data detection unit configured to execute the hooking module, monitor whether the secure data is input by the user, and detect the secure data; and a secure data encryption unit configured to generate encrypted data in which the detected secure data is encrypted.

According to another aspect of the present invention, there is provided an encryption method in a cloud computing environment including a management server in which data to be shared is stored, the method including: injecting a hooking module for encrypting secure data for which security is required among the data into a process for transmitting the data to the management server before the secure data is transmitted to the management server; executing the hooking module, monitoring whether the secure data is input, and detecting the secure data; and generating encrypted data in which the detected secure data is encrypted.

### [Advantageous Effects]

According to the user terminal device for encryption and the encryption method in the cloud computing environment of the present invention, it is possible to prevent important company data or personal information from being leaked using encryption when a file sharing cloud service is used.

### [Description of Drawings]

FIG. 1 is a diagram illustrating a dropbox service for sharing a file in a cloud computing environment.
FIG. 2 is a diagram illustrating an entire network including a user terminal device for encryption in a cloud computing environment according to the present invention.
FIG. 3 is a block diagram illustrating a configuration of an exemplary embodiment of a user terminal device for encryption in a cloud computing environment according to the present invention.
FIG. 4 is a flowchart illustrating a process of performing an exemplary embodiment of an encryption method in a cloud computing environment according to the present invention.

### [Modes of the Invention]

Hereinafter, exemplary embodiments of a user terminal device for encryption and an encryption method in a cloud computing environment according to the present invention will be described in detail with reference to the accompanying drawings.

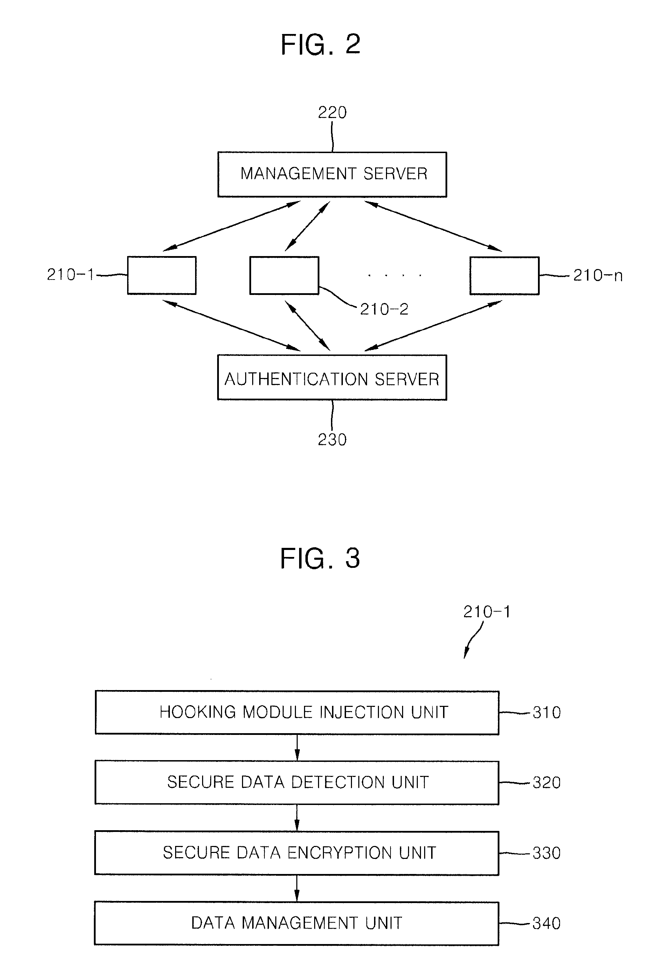

FIG. 2 is a diagram illustrating an entire network including a user terminal device for encryption in a cloud computing environment according to the present invention.

As illustrated in FIG. 2, the entire network includes user terminal devices for encryption 210-1 to 210-n according to the present invention, a management server 220 and an authentication server 230.

The user terminal devices 210-1 to 210-n according to the present invention are devices used by a user who wishes to share data, and may include a desktop computer, a tablet computer, a notebook, a netbook, a smartphone, a PC and the like. In this case, the user terminal devices 210-1 to 210-n may be the same type, but the present invention is not limited thereto.

The management server 220 is a server in which data to be shared is stored and corresponds to a dropbox server in the related art as illustrated in FIG. 1. That is, the management server 220 and the plurality of user terminal devices 210-1 to 210-n build a cloud computing environment. Another user terminal device 210-n may download and use data that is transmitted from one user terminal device 210-1 to the management server 220.

A program for executing a process for transmitting data to the management server 220 and receiving data stored in the management server 220 is installed in each of the user terminal devices 210-1 to 210-n. The program corresponds to a dropbox program that is able to access the dropbox server in the related art as illustrated in FIG. 1 and refers to a program for transmitting a file to the dropbox server when the file is copied to a dropbox folder through the user terminal devices 210-1 to 220-n. Each of the user terminal devices 210-1 to 210-n injects a hooking program into such a program, detects secure data that is set as necessary data for security management among data to be transmitted to the management server 220, performs encryption, and generates encrypted data.

The encrypted data corresponds to each piece of the secure data, and restricts user access by encrypting the secure data, but has the same content as the secure data. Each of the user terminal devices 210-1 to 210-n may encrypt the secure data using authentication information that is received from the authentication server 230 or set in advance. The authentication information is information for generating encrypted data by encrypting the secure data or generating secure data by decrypting encryption of the encrypted data. In addition, when the encrypted data is generated, the secure data is deleted, the encrypted data is stored under a file name of the secure data, and it is possible to prevent leakage of an original file, that is, the secure data. As a result, the encrypted data is transmitted to the management server 220 and the encrypted data corresponding to the secure data is downloaded in each of the user terminal devices 210-1 to 210-n.

The user terminal devices 210-1 to 210-n may decrypt encryption of the encrypted data using authentication information that is received from the authentication server 230 or set in advance. In this case, decryption of encryption may be performed by a DRM client that is installed in the user terminal devices 210-1 to 210-n.

FIG. 3 is a block diagram illustrating a configuration of an exemplary embodiment of the user terminal device 210-1 for encryption in a cloud computing environment according to the present invention.

As illustrated in FIG. 3, the user terminal device 210-1 for encryption in the cloud computing environment according to the present invention includes a hooking module injection unit 310, a secure data detection unit 320, a secure data encryption unit 330 and a data management unit 340.

The hooking module injection unit 310 injects a hooking module for encrypting the secure data into a process for transmitting data to the management server 220. Specifically, the hooking module injection unit 310 may inject the hooking module by hooking an initial API of the process for transmitting the secure data to the management server 220.

The secure data detection unit 320 executes the hooking module, monitors whether the secure data is input by a user, and detects the secure data. Data input by the user is classified as secure data for which security is required or non-secure data for which security is not required. Also, the secure data is input to a secure data folder and the non-secure data is input to a non-secure data folder. Specifically, the secure data detection unit 320 monitors whether the non-secure data is input to the non-secure data folder. Also, the secure data detection unit 320 may detect the secure data by monitoring whether the secure data is input to the secure data folder.

Also, there may be at least one of the secure data folder or the non-secure data folder. In at least one secure data folder, authority information to be used may be differently set for each secure data folder. Preferably, authority information for using the secure data folder and authority information for using the secure data included in the secure data folder may be set to be the same, but the present invention is not limited thereto. For example, authority information for using the secure data folder may be set such that only browsing is possible for a secure data folder A and browsing and modifying are possible for a secure data folder B. Also, preferably, authority information is set such that only browsing of secure data a input to the secure data folder A is possible, but the present invention is not limited thereto.

When the secure data is input to the secure data folder from the secure data detection unit 320, the secure data encryption unit 330 encrypts the secure data and generates encrypted data. Specifically, the secure data encryption unit 330 may encrypt the secure data that is input to the secure data folder and detected using authentication information set in advance, generate encrypted data, and delete the secure data. For example, the secure data encryption unit 330 may delete the secure data when the encrypted data is generated through the encryption process and replace the secure data as the encrypted data using a method in which the encrypted data is stored in the secure data folder under a file name of the secure data.

Also, authentication information used for the secure data encryption unit 330 to encrypt the secure data may include at least one of unique identification information of the secure data folder and authority information used for decrypting encryption of the secure data to use the secure data. The unique identification information of the secure data folder and the authority information may be set in advance through a UI in which authority may be set for each secure data folder.

Meanwhile, when modification is completed by a program capable of modifying the secure data input to the secure data folder, the secure data encryption unit 330 generates encrypted data in which the secure data is encrypted. Specifically, when a document is written by a program capable of editing a document such as Microsoft Office, the document is transmitted to the dropbox server whenever the document is stored when a document (data) storing path is set to a dropbox folder in the related art.

However, when the user terminal devices 210-1 to 210-n according to the present invention are used and data is stored in the secure data folder during a process of editing the secure data, since the secure data encryption unit 330 has no write access, encryption of the secure data is impossible. Therefore, when the data management unit 340 accesses the secure data in order to transmit the secure data to the management server 220, the secure data encryption unit 330 generates a share violation command and blocks access of the data management unit 340 to the secure data. Also, the secure data encryption unit 330 periodically identifies write access of the secure data. When the program capable of editing is terminated and the secure data is accessible with write access, the secure data encryption unit 330 may encrypt the secure data through the write access. The share violation command is a command for disabling transmission of the secure data to the management server 220 before modification of the secure data is completed through the program capable of editing a document edit.

The data management unit 340 transmits at least one of the non-secure data input to the non-secure data folder and the encrypted data that is input to the secure data folder and encrypted to the management server 220. The data management unit 340 may correspond to the dropbox program described in FIG. 1. As a result, the non-secure data and the encrypted data are stored in the management server 220.

Also, the data management unit 340 may receive at least one of the non-secure data and the encrypted data stored in the management server 220 from the management server 220. In this case, the encrypted data that is encrypted by another user terminal device 210-1 may decrypt encryption using authentication information set in advance and use the result. Also, through the authentication information received from the authentication server 230 described above, encryption of the encrypted data may be decrypted and the result may be used.

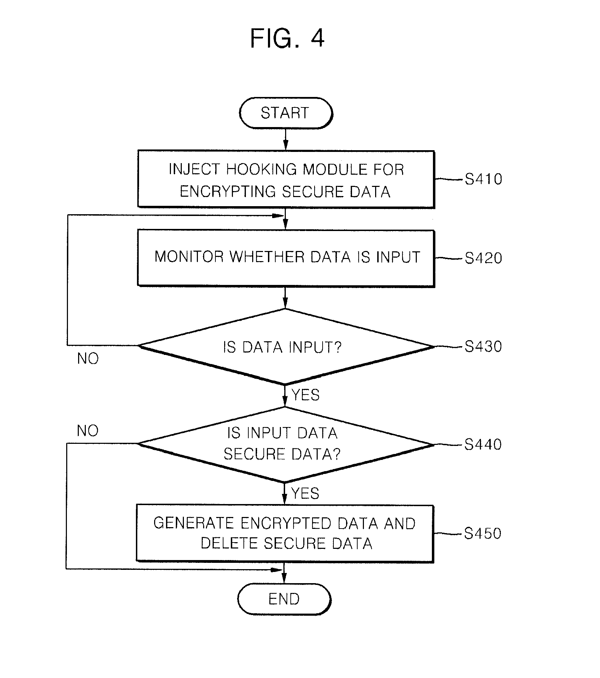

FIG. 4 is a flowchart illustrating a process of performing an exemplary embodiment of an encryption method in a cloud computing environment according to the present invention.

The hooking module injection unit 310 injects the hooking module for encrypting the secure data into a process for transmitting data to the management server 220 (S410).

Then, the secure data detection unit 320 executes the hooking module and monitors whether data is input by a user to a secure data folder or a non-secure data folder (S420).

In this case, the secure data detection unit 320 determines whether data is input to the secure data folder or the non-secure data folder (S430), when no data is input, continuously monitors (S420), or when data is input, determines whether the input data is the secure data (S440). In this case, the secure data detection unit 320 recognizes the data input to the secure data folder as secure data.

Then, the secure data encryption unit 330 encrypts the secure data that is input to the secure data folder and detected, generates encrypted data corresponding to the secure data, and then deletes the secure data before encryption (S450).

As a result, the encrypted data is stored in the secure data folder, and the input non-secure data is directly stored in the non-secure data folder. Then, at least one of the encrypted data and the non-secure data is transmitted to the management server 220 through the data management unit 340 corresponding to a dropbox program in the related art.

That is, before the secure data input to the secure data folder is transmitted to the management server 220, the data is encrypted and the encrypted data corresponding to the secure data is generated. Then, the secure data is deleted and the encrypted data is transmitted to the management server 220.

The present invention may be implemented as a computer readable code in a computer readable recording medium. The computer readable recording medium includes any type of recording device in which data that can be read by a computer system is stored. Examples of the computer readable recording medium include a ROM, a RAM, a CD-ROM, a magnetic tape, a floppy disk, and an optical data storage device, and also include implementation in the form of carrier waves (for example, transmission via the Internet). In addition, the computer readable recording medium may be distributed to a computer system connected via a network and a code that can be read by a computer may be stored and executed in a distributed manner.

While exemplary embodiments of the present invention have been illustrated and described above, the invention is not limited to the aforementioned specific exemplary embodiments. Those skilled in the art may variously modify the invention without departing from the gist of the invention claimed by the appended claims and the modifications are within the scope of the claims.

## Claims

1. A user terminal device that is used by a user in order to access a management server in which data to be shared is stored in a cloud computing environment, the user terminal device comprising:
a hooking module injection unit configured to inject a hooking module for encrypting secure data for which security is required among the data into a process for transmitting the data to the management server before the secure data is transmitted to the management server;
a secure data detection unit configured to execute the hooking module, monitor whether the secure data is input by the user, and detect the secure data; and
a secure data encryption unit configured to generate encrypted data in which the detected secure data is encrypted.

2. The user terminal device of claim 1, further comprising:
a data management unit configured to transmit at least one of non-secure data input to a non-secure data folder and encrypted data that is input to a secure data folder and encrypted to the management server, and receive data that includes the non-secure data and the secure data and is stored in the management server,
wherein the secure data detection unit detects the secure data by monitoring whether the non-secure data is input to the non-secure data folder to which the non-secure data for which security is not required among the data is input or by monitoring whether the secure data is input to the secure data folder to which the secure data is input; and
the secure data encryption unit uses authentication information set in advance, generates encrypted data obtained by encrypting the secure data that is input to the secure data folder and detected, and deletes the secure data.

3. The user terminal device of claim 2, wherein the authentication information includes at least one of unique identification information of the secure data folder and authority information for decrypting encryption of the secure data to use the secure data.

4. The user terminal device of claim 2, wherein there is at least one secure data folder and the authentication information includes authority information for using the secure data folder for each of the at least one secure data folder.

5. The user terminal device of claim 2, wherein the secure data encryption unit generates a share violation command for disabling transmission of the secure data to the management server before modification of the secure data is completed by a program capable of modifying the secure data, and when the modification of the secure data is completed by the program capable of modifying the secure data, generates encrypted data in which the secure data is encrypted.

6. An encryption method in a cloud computing environment including a management server in which data to be shared is stored, the method comprising:
injecting a hooking module for encrypting secure data for which security is required among the data into a process for transmitting the data to the management server before the secure data is transmitted to the management server;
executing the hooking module, monitoring whether the secure data is input, and detecting the secure data; and
generating encrypted data in which the detected secure data is encrypted.

7. The encryption method of claim 6, further comprising:
transmitting at least one of non-secure data input to a non-secure data folder and encrypted data that is input to a secure data folder and encrypted to the management server,
wherein the detecting of the secure data includes,
detecting the secure data by monitoring whether the non-secure data is input to the non-secure data folder to which the non-secure data for which security is not required among the data is input or by monitoring whether the secure data is input to the secure data folder to which the secure data is input, and
wherein the encrypting of the secure data includes,
using authentication information set in advance, generating the encrypted data obtained by encrypting the secure data that is input to the secure data folder and detected, and deleting the secure data.

8. The encryption method of claim 7, wherein the authentication information includes at least one of unique identification information of the secure data folder and authority information for decrypting encryption of the secure data to use the secure data.

9. The encryption method of claim 7, wherein there is at least one secure data folder and the authentication information includes authority information for using the secure data folder for each of the at least one secure data folder.

10. The encryption method of claim 7, wherein, in the encrypting of the secure data, a share violation command for disabling transmission of the secure data to the management server is generated before modification of the secure data is completed by a program capable of modifying the secure data, and encrypted data in which the secure data is encrypted is generated when the modification of the secure data is completed by the program capable of modifying the secure data.

11. A computer readable recording medium recording a program causing the encryption method described in any one of claims 6 to 10 to be executed in a computer.
